# EUROPÄISCHE PATENTSCHRIFT

(11) **EP 2 834 904 B1**
(45) Veröffentlichungstag und Bekanntmachung des Hinweises auf die Patenterteilung: **18.05.2016**
(21) Anmeldenummer: 12818511.3
(22) Anmeldetag: 21.12.2012
(51) Int. Cl.: H02K 3/04, H02K 3/47, H02K 15/04, H02K 15/06, H02K 15/08, H02K 15/12, H02K 23/00

(54) **VERFAHREN ZUR HERSTELLUNG VON ROTIERENDEN ELEKTRISCHEN MASCHINEN**
METHOD FOR PRODUCING ROTATING ELECTRICAL MACHINES
PROCÉDÉ DE RÉALISATION DE MACHINES ÉLECTRIQUES ROTATIVES

(30) Priorität: 07.04.2012 DE 102012007232
(43) Veröffentlichungstag der Anmeldung: 11.02.2015
(73) Patentinhaber: Weller, Traugott, 04275 Leipzig (DE); Weller, Susanne, 04275 Leipzig (DE)
(72) Erfinder: Weller, Traugott, 04275 Leipzig (DE); Weller, Susanne, 04275 Leipzig (DE)
(74) Vertreter: Prinz & Partner mbB
(86) Internationale Anmeldenummer: PCT/EP2012/076737
(87) Internationale Veröffentlichungsnummer: WO 2013/149688

(56) Entgegenhaltungen:
- EP-A1- 1 508 954
- DE-A1-102004 034 611

## Beschreibung

Die Erfindung bezieht sich auf ein Verfahren zur Herstellung einer rotierenden elektrischen Maschine mit einer eisenlosen Wicklung in Form von Motoren oder Generatoren, die Luftspalte aufweisen, in denen die Wicklung verläuft.

Derartige Motoren werden auch als Luftspulenmotoren bezeichnet und weisen einen hohen Wirkungsgrad auf.

Aus dem Stand der Technik sind verschiedene Bauweisen bekannt, zum einen Motoren mit glockenförmigen Spulen und zum anderen Motoren, bei denen die Ankerspule den Rotor vollständig umgibt. Innerhalb der Ankerspulen ist auf einer Welle ein freidrehbarer Permanentmagnet vorgesehen, wobei Ankerspule und Permanentmagnet gleichachsig gelagert sind.

Aus dem DE 20 2006 007 619 U1 ist eine Glockenankerspule bestehend aus einer aus einem Wickeldraht gewickelten hohlzylindrischen Spulenwicklung bekannt, in deren Spulenöffnung einendig eine Spulenträgerplatte eingesetzt ist. Die Glockenankerspule bildet den aktiven Teil des Rotors und ist als selbsttragende zylindrische Spule mit einer Schrägwicklung ausgebildet.

Zum Wickeln der Glockenankerspulen sind verschiedene Verfahren bekannt.

Ein Verfahren sieht das Wickeln der Wicklung auf einer Hülse oder einem Dorn vor. Das Wickeln erfolgt nacheinander in verschiedenen Schichten, wobei nach jeder Schicht ein Fixieren des Drahtes durch Erwärmen (Zwischenbacken) erfolgt. Daran schließt sich das Wickeln der nächsten Schicht an, bis die Spule fertig gestellt ist. Die abschließende Formgebung erfolgt durch das so genannte Fertigbacken. Ein weiteres Verfahren besteht darin, dass die gesamte Wicklung auf eine Hülse oder einen Dorn gewickelt wird, an dessen Umfang der beiden Enden verteilte feine Stifte vorgesehen sind, die die Wicklung während des Wickelvorganges fixieren. Es erfolgt ein kontinuierliches Wickeln ohne Zwischenbacken. Anschließend erfolgt das Entfernen der Stifte, das Abziehen der Spule und als Fertigbacken der Spule. Als Wickeldraht wird ein so genannter Backlackdraht verwendet. Vorzugsweise erfolgt die Wicklung als Schrägwicklung, die einfach zu realisieren ist und eine gute selbsttragende Eigenschaft hat.

Aus der DE 28 21 740 B2 ist ein Verfahren zur Herstellung einer Glockenspule bekannt, bei dem diese nach dem Wickeln verdichtet wird. Hierfür wird ein Spreizdorn oder ein Druckkissen verwendet, das in radialer Richtung nach außen auf die Wicklung wirkt und diese gegen eine Außenform drückt.

Aus der DE 10 2004 034 611 A1 sind ein Elektromotor und ein Verfahren zu seiner Herstellung bekannt, bei dem eine Spule ein Innenteil umschließt. Beim Vergießen werden Teile der Motorwicklung gegen ein Widerlager gedrückt.

Aus der EP 1 508 954 sind ein Elektromotor und ein Verfahren zu seiner Herstellung bekannt, bei dem eine Wicklung einer Spule mittels eines Backlackdrahtes verbacken wird. Es können Preßwerkzeuge verwendet werden, um die Spule beim Verbacken zu formen.

Nachteile dieser Wicklungen sind einerseits der relativ große unwirksame Leiteranteil innerhalb jeder Spule und andererseits der schräge Leiterverlauf zur Bewegungsrichtung.

Ein weiterer Nachteil liegt darin, dass der wirksame Leiter nur durch axiale Verlängerung der Maschine erhöht werden kann. Dies findet schnell seine technischen Grenzen, sodass aufgrund der hohen Fliehkräfte ein Zusammenhang mit der einseitigen Lagerung der Wicklung nur relativ kurze Glockenanker verwendet werden können.

Aus der DE 101 37201 A1 ist eine Luftspaltwicklung in Glockenform innerhalb einer elektrischen Maschine bekannt. Bei der Wicklungsart handelt es sich um eine Luftspaltwicklung mit mindestens teilweise schrägen oder bogenförmig zur Bewegungsrichtung verlaufenden Leitern. Die konstruktive Form besteht darin, dass die Leiter innerhalb einer rotierenden Maschine im Schnitt quer zur Bewegungsrichtung gezielt gebogen oder gefaltet sind, wobei die Wicklung sich der Achse oder Welle, in Achsrichtung, mindestens einseitig annähert. Die günstigen geometrischen Effekte entstehen durch die konstruktive Form der Biegung oder Faltung mit Achsannäherung der Wicklung und durch gezielte Verzerrung des herkömmlichen Wickelkanals innerhalb der gebogenen oder gefalteten Form der Wicklung.

Weiterhin bekannt ist aus der GB 95 46 23 A ein Gleichstromkleinmotor, bei dem das magnetische Erregerfeld durch einen innerhalb des Ankers angeordneten Dauermagneten, der frei drehbar und gleichachsig mit diesem gelagert ist, erzeugt wird. Der Motor kann beispielsweise aus einem Wicklungsträger aus einem rohrförmigen Mantel mit zwei stirnseitigen Scheiben oder zwei beabstandeten Stützscheiben, zwischen denen die Wicklung selbst freitragend angeordnet ist, bestehen. Auf dem Wicklungsträger ist die Wicklung angebracht. Innerhalb derselben ist der Kernmagnet mittels Lager auf der Rotorwelle drehbar gelagert. Nachteilig ist hier bei der freitragenden Ausführung der Wicklung der relativ große Luftspalt, um ein Schleifen der Wicklung am Kernmagnet oder am Gehäusemantel zu verhindern.

Aus der DE 694 07 908 T2 ist ein Verfahren zur Herstellung einer Wicklung für einen Elektromotor bekannt, bei dem ein Wickeldraht auf einem Trägerdorn oder alternativ auf dem späteren Läufer gewickelt und unmittelbar nach dem Wickeln fixiert wird. Die Wicklung kann in radialer Richtung nach außen verpresst werden, um die Packungsdichte zu erhöhen. Das Verpressen kann in der Magnet-Rückschlusshülse des Motors erfolgen oder vor dem Einsetzen in die Magnet-Rückschlusshülse in einer separaten Vorrichtung.

Ausgehend vom Stand der Technik besteht die Aufgabe der Erfindung darin, ein Verfahren zur Herstellung rotierender elektrischer Maschinen mit einer freitragenden Wicklung für Motoren oder Generatoren anzugeben. Diese Wicklung kann sowohl als Rotor für einen eisenlosen Luftspulenanker als auch als Stator an einem Eisenpaket fixiert zur Erzeugung eines elektrischen Drehfelds wirken und soll ebenfalls fertigungstechnisch einfach herstellbar sein.

Erfindungsgemäß wird die Aufgabe gelöst mit einem Verfahren zur Herstellung einer freitragenden Motorspule für Motoren oder Generatoren gemäß dem Anspruch 1 sowie einer elektrischen Maschine gemäß dem Anspruch 9. Allgemein ausgedrückt wird eine Motorspule um das zylindrische Innenteil so gewickelt, dass sie dieses vollständig umgibt. Das zylindrische Innenteil wird verwendet, um die Motorspule von der Innenseite aus zu verdichten, so dass nach dem Wickeln der das Innenteil umschließenden Motorspule ein präziser Luftspalt zur freien Rotationsbewegung dieser Spule oder des beschriebenen Innenteils erhalten wird. Dies geschieht insbesondere mit den folgenden Schritte: Zunächst werden die einzelnen Segmente der Spule zwischen zwei Endplatten über das auf einer Welle angeordnete Innenteil gewickelt, wobei dieses nach Abschluss des Wickelns endgültig von der fertigen Motorspule umgeben ist. Dann erfolgt ein Schritt der Formgebung der Motorspule durch serielles Verpressen der Wickeldrähte mit dem exzentrischen Abrollen des Innenteils auf der Innenseite der Spule gegen ein von außen angebrachtes rundes Widerlager, welches entweder aus Rohrsegmenten oder als ganzer Zylinder die Außenseite der Spule durch die eingebrachte Gegenkraft formt. Schließlich wird die Motorspule durch Wärmeeinbringung in die Spule verbacken, so dass sie als freitragende Motorspule ihre Form behält.

Alternativ dazu kann der Formgebungsschritt mit dem Schritt zur Wicklung der Motorspule zusammengefasst werden. Dann ergibt sich das folgende Verfahren: Wickeln der Ankerwicklung schrittweise zwischen zwei Endplatten über das auf einer Welle angeordnete Innenteil, wobei dieses von der Motorwicklung vollständig umgeben ist, und Verpressen der Wickeldrähte durch die Oberfläche des Innenteils gegen ein Widerlager, wobei die Oberfläche des Innenteils exzentrisch auf der Innenseite der Motorspule abrollt und diese gegen ein Widerlager während des Wickelvorganges preßt. Anschließendes Verbacken der Motorspule durch Wärmebeaufschlagung.

Weiterhin besteht alternativ die Möglichkeit, alle Arbeitsschritte zu einem Schritt zusammenzufassen, wobei während des Wickelvorganges gleichzeitig ein Verpressen und ein Verbacken der Windungen stattfindet.

Ebenfalls kann die exzentrische Abrollbewegung zum Verpressen der Wicklung auch umgekehrt vom Widerlager auf ein axial feststehendes Innenteil eingebracht werden.

Zur Verbesserung des Ergebnisses der Formgebung der Motorspule kann das Widerlager mit einer mechanischen Vibration angeregt werden. Damit wird die Massenträgheit zum Verpressen genutzt und die zugeführte notwendige Andruckkraft über die Welle verringert.

Die Motorspule wird vorzugsweise aus einem Backlackdraht gewickelt, wodurch eine mechanische Fixierung während oder nach dem Wickelvorgang möglich wird. Weiterhin wird vorgeschlagen, den Wickeldraht in der letzten Stufe der Drahtzuführung viereckig anzurollen, also während des Wickelns der letzten Windungen der Motorspule. In der so allseitig angeflachten Form liegt der Wickeldraht stabiler in der Wickellage, und der Wirkungsgrad der Maschine wird aufgrund der höheren Kupferfüllung wesentlich verbessert.

Das Innenteil auf der Welle kann sowohl Permanentmagnete als auch eine Kurzschluss- oder Erregerwicklung tragen, wobei das Innenteil die Form eines Zylinders mit glatter Mantelfläche besitzt, um die Isolation des Wickeldrahtes bei der Formgebung nicht zu beschädigen.

Die Motorspule kann wahlweise als Stator (mechanisch mit dem äußeren magnetischen Teil verbunden) oder als Rotor (über Schleifringe bzw. Kommutator elektrisch angeschlossen) wirken. Die Polpaarzahl der Motorspule und die Phasen zur Ansteuerung der Maschine sind frei wählbar. Die Vorteile des erfindungsgemäßen Verfahrens liegen darin, daß die Fertigung der Motorspule direkt auf dem auf der Welle angeordneten Innenteil mit Wandscheiben, der gleichzeitig den Wickelkörper bildet, erfolgt. Durch die gerade Drahtführung im senkrechten Teil der Wicklung sowie dem einfachen Verlauf im Wendeteil kann eine einfache und schnelle Wickeltechnik eingesetzt werden. Zwischenpositionen mit Umlenkführungen sind nicht notwendig.

Die Motorspule wird mit den einzelnen Wicklungen in einer festen Abfolge, aber geschlossen hergestellt. Das einzelne Formen, Verpressen und Zusammensetzen von Spulensegmenten entfällt.

Da das als Wickelkörper dienende Innenteil von allen Seiten zugänglich ist, werden einfache, rahmenähnliche Wicklungsformen möglich, die gegenüber dem Glockenanker einen wesentlich besseren Gesamtwirkungsgrad der Maschinen ergeben.

Durch den Formgebungsvorgang werden Fertigungstoleranzen egalisiert und so der benötigte Luftspalt minimiert. Dadurch erhöht sich die erzielbare Leistungsdichte.

Eine erfindungsgemäße rotierende elektrische Maschine, die mittels des erfindungsgemäßen Verfahrens hergestellt ist, ist dadurch gekennzeichnet, dass sie ein magnetisches Innenteil und eine aus mindestens einer Wicklung bestehende Motorspule aufweist, die sich entlang der zylindrischen Außenfläche des Innenteils, über eine der Stirnseiten des Innenteils, zurück über die Außenfläche des Innenteils und über die andere Stirnseite des Innenteils erstreckt, wobei zwischen der Innenseite der Motorspule und der Außenfläche des Innenteils ein Luftspalt vorhanden ist und wobei die Wicklung mindestens in dem an die Innenseite angrenzenden Abschnitt mechanisch dadurch verdichtet ist, dass die Oberfläche des Innenteils exzentrisch auf der Innenseite der Motorspule abrollt und diese gegen ein Widerlager presst. Der mechanisch verdichtete Bereich zeichnet sich dadurch aus, dass dort der pro betrachtete Flächeneinheit vorhandene Querschnitt des Materials der Motorspule, insbesondere Kupferleiter, höher ist als in den nicht verdichteten Bereichen auf der radial außenliegenden Seite der Motorspule.

Vorzugsweise sind die an der Innenseite der Motorspule liegenden Drahtabschnitte auf der zur Mittelachse des Innenteils weisenden Seite abgeflacht. Die Abflachung ergibt sich aus der Walzwirkung des Innenteils, mit der der Luftspule zwischen der Motorspule und dem Innenteil erzeugt wird.

Vorzugsweise ist vorgesehen, dass sich die Wicklung im Bereich der Außenfläche des Innenteils parallel zur Mittelachse des Innenteils erstreckt. Dies führt zu einem hohen Wirkungsgrad der elektrischen Maschine, da sich ein großer Anteil der Länge der Leiter, aus denen die Motorspule besteht, sich senkrecht zur Bewegungsrichtung durch das Zentrum des Magnetfeldes erstreckt. Dies ist ein wesentlicher Vorteil gegenüber beispielsweise einer Glockenspule, bei der sich die Leiter der Motorspule überwiegend schräg über das Magnetfeld erstreckt.

Anhand eines Ausführüngsbeispiels soll die Erfindung näher beschrieben werden. Es zeigen:
Figur 1 in einem schematischen Längs- und Querschnitt ein Innenteil der elektrischen Maschine mit der dieses umschließenden Motorspule,
Figur 2 in einem schematischen Längs- und Querschnitt den Formgebungsvorgang,
Figur 3 in einem schematischen Längs- und Querschnitt die fertige elektrische Maschine ,
Figur 4 in einer schematischen perspektivischen Ansicht ein Innenteil der erfindungsgemäßen elektrischen Maschine,
Figur 5 in einer schematischen perspektivischen Ansicht das Innenteil von Figur 4 in einem ersten Zwischenzustand bei der Herstellung der Motorspule,
Figur 6 in einer schematischen perspektivischen Ansicht das Innenteil von Figur 4 in einem zweiten Zwischenzustand bei der Herstellung der Motorspule,
Figur 7 in einer schematischen perspektivischen Ansicht das Innenteil mit der dieses umschließenden Motorspule.

Die Herstellung einer rotierenden elektrischen Maschine mit einer eisenlosen freitragenden Ankerwicklung wird im Ausführungsbeispiel anhand des dreistufigen Verfahrens beschrieben.

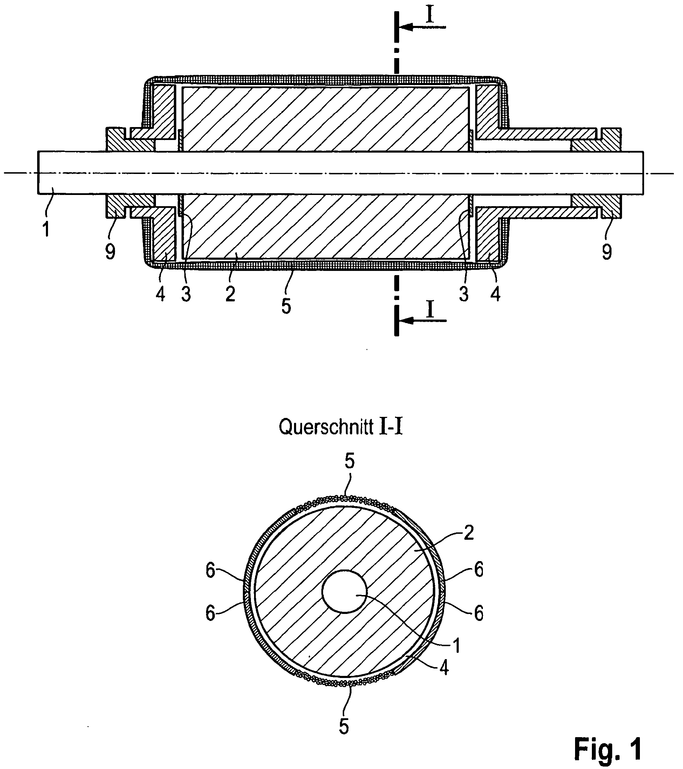

Die Figur 1 zeigt eine Prinzipdarstellung einer Motor- oder Ankerwicklung 5 nach Abschluss des Wickelvorganges. Vor dem Wickeln des Ankers 5 wird auf eine Welle 1 mit einem Innenteil 2, das beispielsweise aus einem zylinderförmigen Permanentmagneten besteht, beidseitig je eine Distanzscheibe 3 und eine Endplatte 4 aufgeschoben. Anschließend werden die Endplatten 4 mittels einer Buchse 9 auf der Welle 1 zentriert. Die so vorbereitete Baueinheit wird in eine Wickeleinrichtung eingesetzt und mehrere Platzhalter 6 für den Wickelvorgang eingesetzt. Die Wicklung des Ankers erfolgt im ersten Herstellungsschritt dann schrittweise zwischen den Endplatten 4 über das Innenteil 2 und umschließt dieses zuletzt vollständig. Als Wickeldraht kommt ein so genannter Backlackdraht zum Einsatz, der für die Herstellung der letzten Stufe der Wicklung mittels einer Einrichtung quadratisch eingerollt wird. Dies gewährleistet, dass die letzten Wicklungen der entsprechenden Spule, also die außen liegenden Wicklungen, enger beieinanderliegen, da die einzelnen Drähte bei quadratischem Querschnitt (im Idealfall) spaltfrei aneinander anliegen können und nicht, wie bei einem runden Drahtquerschnitt, zwischen den einzelnen Drähten ein Freiraum verbleibt.

Grundsätzlich ist auch denkbar, den für die Motorspule verwendeten Draht während des gesamten Wickelns mit einem quadratischen Querschnitt zu verwenden.

Durch das freie Wickeln über die Lager der Motorspule ergibt sich in der Mitte zwangsweise eine Aufdickung, die keinen Luftspalt erlaubt und die notwendige Freiheit des Rotors blockiert. Dieser Mangel wird mit dem folgenden Formatieren der Spule behoben.

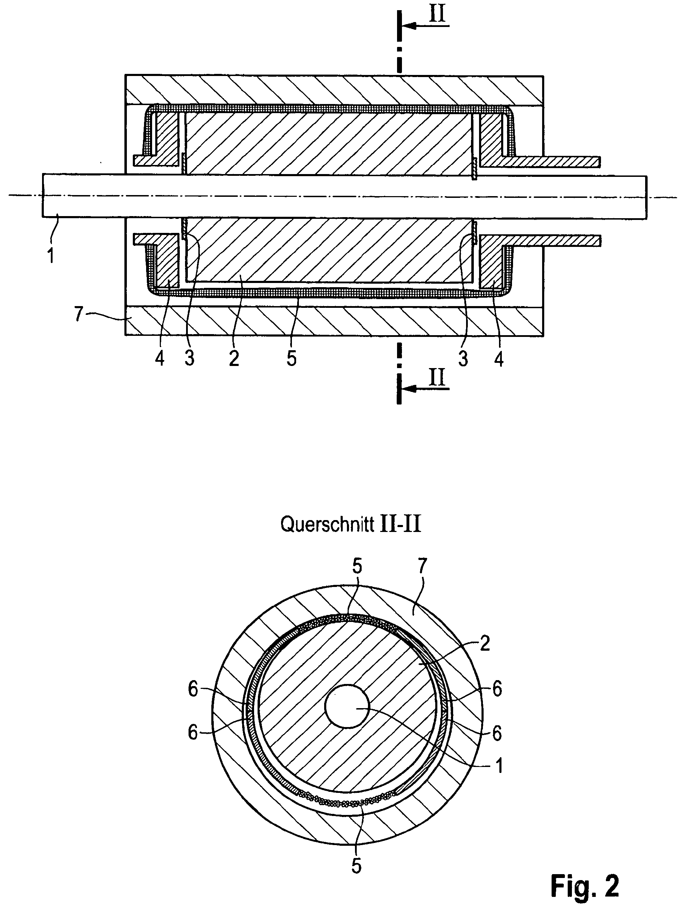

Nach dem Wickelvorgang werden die Buchsen 9, die die Endplatten 4 zentrisch zur Welle 1 halten, entfernt und ein Widerlager 7 aufgeschoben (Figur 2). Die Baueinheit wird in eine Vorrichtung eingelegt, und die Welle 1 mit dem Innenteil 2 wird in eine exzentrische Bewegung versetzt. Dadurch rollt das Innenteil 2 exzentrisch auf der Innenseite der Ankerwicklung 5 ab und verdichtet die Wicklung gleichmäßig gegen das Widerlager 7 und bringt die Ankerwicklung 5 in Form (zweiter Herstellungsschritt). In Figur 2 ist die Ankerwicklung in einem Zustand gezeigt, in welchem die Wicklungen durch die walzende Wirkung des Innenteils 2 bereits so weit verdichtet sind, dass ein Freiraum zwischen der Außenfläche des Innenteils 2 und der Innenfläche der Ankerwicklung 5 gebildet ist. Dieser Freiraum ist in den Schnitten von Figur 2 jeweils unterhalb des Innenteils 2 gut zu sehen.

Vor und während dem Walzen/Verdichten wird die Ankerwicklung 5 mit Wärme beaufschlagt.

Nach dem Formgebungsvorgang wird das Widerlager 7 entfernt und die verpresste Ankerwicklung 5 mit Wärme beaufschlagt, wodurch die einzelnen Drähte der Wicklung untereinander verbacken werden (dritter Herstellungsschritt). Die Wärmebeaufschlagung der Ankerwicklung 5 kann dadurch erfolgen, dass ein geeignet starker Strom durch die Ankerwicklung geleitet wird. Grundsätzlich ist allerdings auch möglich, die notwendige Energie in anderer Weise von außen zuzuführen, beispielsweise durch Strahlung oder Heißluft.

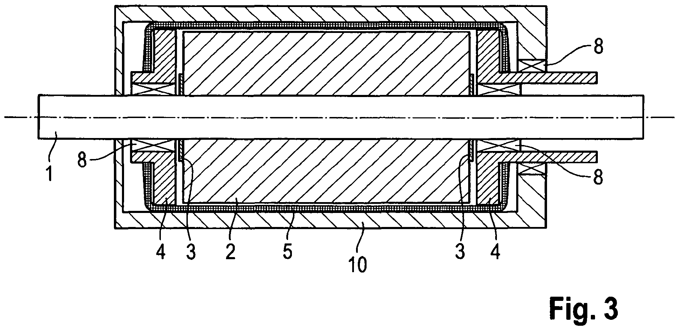

Anschließend werden Lager 8 in die Endplatten 4 eingesetzt und fixieren die Ankerwicklung 5 in Bezug zur Welle 1 (Figur 3). Dadurch ergibt sich ein minimierter Luftspalt zwischen der zylindrischen Oberfläche des Innenteils 2 und der Innenseite der Ankerwicklung 5. Anschließend wird die Ankerwicklung 5 in üblicher Weise mit den elektrischen Anschlüssen versehen und mit der Welle 1 und dem Innenteil 2 in das Gehäuse 10 eingesetzt, wobei eine der Endplatten 4 der Ankerwicklung mittels eines Lagers 8 im Gehäuse 10 drehbar gelagert wird, so dass die mechanische Leistung des Ankers nach außen übertragen werden kann.

Wenn die Ankerwicklung 5 feststehend angeordnet ist und die mechanische Leistung von der Welle 1 abgegriffen wird, ist das Lager 8, bezogen auf Figur 3, auf der linken Seite des Gehäuses 10 angeordnet, um die Welle 1 im Gehäuse 10 zu lagern.

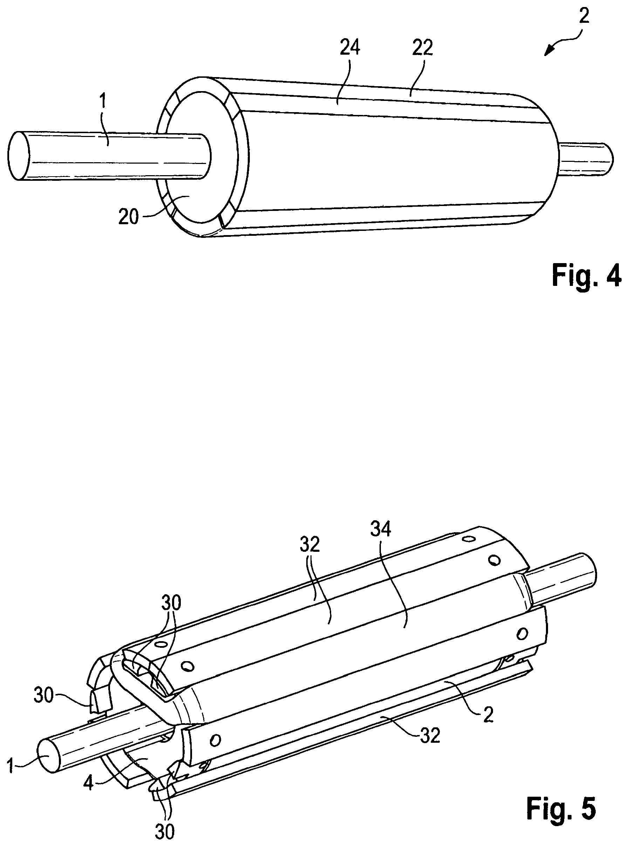

Anhand der Figuren 4 bis 7 werden nachfolgend einige Details der erfindungsgemäßen elektrischen Maschine und des Verfahrens zu ihrer Herstellung in einer 4-poligen Brushless-Innenpolausführung erläutert.

In Figur 4 ist das zylindrische Innenteil 2 gezeigt, welches einen magnetisch leitenden Kern 20, mehrere Magnete 22 und in Umfangsrichtung zwischen den Magneten 22 angeordnete Füllelemente 24 aufweist. Mit dem magnetisch leitenden Kern 20 ist die aus den Figuren 1 bis 3 bekannte Welle 1 drehfest verbunden. Wesentliches Merkmal des Innenteils 2 ist, dass es eine zylindrische, im Wesentlichen glatte Umfangsfläche aufweist.

In Figur 5 ist ein erster Zwischenzustand beim Wickeln der Motorspule 5 gezeigt. Es sind die Endplatten 4 zu erkennen, die auf beiden Seiten auf die Welle 1 aufgeschoben sind, bis sie sich in geringem Abstand zu den beiden Stirnseiten des Innenteils 2 befinden. Um die konzentrische Ausrichtung der Endplatten 4 relativ zum Innenteil 2 zu gewährleisten, können die aus Figur 1 bekannten Buchsen 9 verwenden werden, die in Figur 5 nicht gezeigt sind. Da eine Zentrierung nicht zwingend notwendig ist, ist es auch denkbar, die Motorspulen 5 zu wickeln, ohne dass die Buchsen 9 verwendet werden. Es ist zu erkennen, dass der Durchmesser der Endplatten 4 geringfügig größer ist als der Durchmesser des Innenteils 2.

In Figur 5 sind mehrere Wickelhilfen 30 zu sehen, die als Vorsprünge an den Endplatten 4 ausgeführt sind. In der gezeigten Ausführungsform sind die Wickelhilfen einstückig mit den Endplatten ausgeführt und erstrecken sich parallel zur Welle 1 vom Innenteil 2 weg. Sie dienen dazu, die Wicklung in der gewünschten Weise über die Stirnseiten der Endplatten 4 zu führen. Am Außenumfang der Endplatten 4 können durch Bohrungen und Stifte auch verschiedene Platzhalter 32 fixiert werden, die gewährleisten, dass die Wicklungen sich präzise in einem für sie vorgesehenen Segment erstrecken. In Figur 5 ist eine Wicklung 34 gezeigt, die zwischen zwei benachbarten Platzhaltern 32 ausgeführt ist und in ihrem sich entlang der Außenumfangsfläche des Innenteils 2 erstreckenden Abschnitt parallel zur Mittelachse des Innenteils erstreckt. Jede Wicklung weist somit einen "Hinabschnitt" auf, der sich entlang der Außenfläche des Innenteils erstreckt, einen ersten umgelenkten Abschnitt, der über die Stirnseite einer der Endplatten 4 innerhalb der Wickelhilfen 30 verläuft, einen "Rückabschnitt", der ebenfalls entlang der Außenfläche des Innenteils 2 verläuft, und einen zweiten umgelenkten Abschnitt, der über die Stirnseite der anderen Endplatte verläuft. Jede Wicklung 34 verläuft also über sämtliche Außenflächen (zylindrische Umfangsfläche und zwei Stirnseiten) des Innenteils.

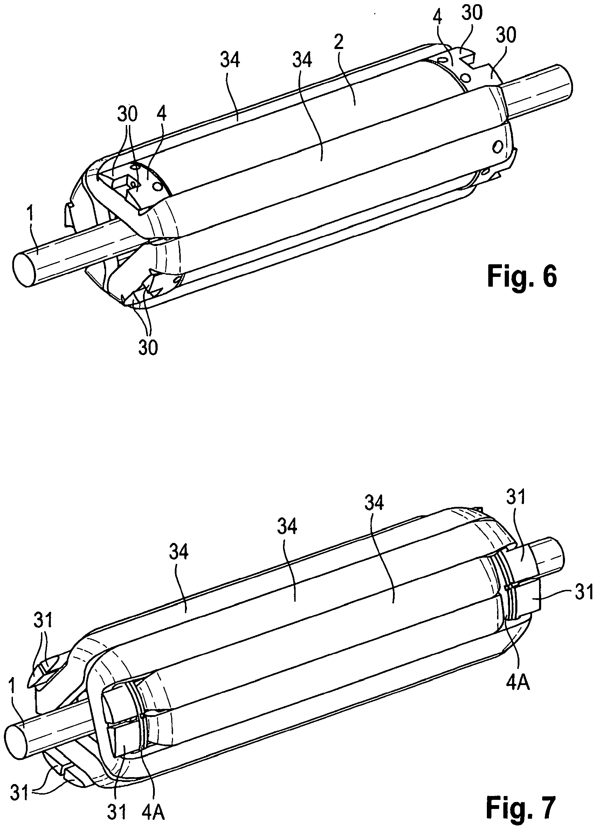

In Figur 6 ist das Innenteil mit drei fertiggestellten Wicklungen 34 zu sehen, den sogenannten Innenwicklungen. Es handelt sich hier um die Wicklungen, deren Umgelenkte Abschnitte unmittelbar auf den Stirnseiten der Endplatten 4, innerhalb der Wickelhilfen 30, aufliegen und keine anderen Wicklungen kreuzen.

Nachdem die Innenwicklungen fertiggestellt sind, werden zwei weitere Endplatten 4A aufgesetzt, die wiederum mit Wickelhilfen 31 in der Form von einstückig angebrachten Vorsprüngen versehen sind.

In Figur 7 ist das Innenteil mit den fertiggestellten Wicklungen gezeigt. Gegenüber dem in Figur 6 gezeigten Zustand sind auch die äußeren Teilwicklungen fertiggestellt, sodass insgesamt sechs unmittelbar aneinander angrenzende Wicklungen gebildet sind. Die einzelnen Anschlüsse der Wicklungen sind hier der besseren Übersichtlichkeit halber nicht gezeigt. Vom Innenteil ist nur noch die Welle 1 zu sehen, da die Wicklungen das Innenteil vollständig umschließen.

In dem in Figur 7 gezeigten Zustand erstrecken sich die inneren Lagen der einzelnen Wicklungen nicht in einem konstanten Abstand von der Mittelachse des Innenteils 2, sondern verlaufen leicht bogenförmig. Im Bereich der Endplatten 4 entspricht ihr Abstand von der Mittelachse dem Radius, der durch die Abmessungen der Endplatten 4 vorgegeben ist. In der Mitte zwischen den Endplatten (und auch in einem nicht präzise definierten Bereich beiderseits der Mitte) liegen die einzelnen Drähte jedoch auf der zylindrischen Außenfläche des Innenteils 2 auf. Daher ist es unmittelbar nach dem Wickeln der Wicklungen kaum möglich, das Innenteil 2 innerhalb der Wicklungen zu drehen. Der für die Freigängigkeit des Innenteils 2 nötige Luftspalt zwischen der Außenfläche des Innenteils 2 und den Wicklungen wird erst dadurch erzeugt, dass die Wicklungen in radialer Richtung nach außen komprimiert werden. Hierfür wird das Innenteil 2 als Werkzeug benutzt, welches eine Kraft in radialer Richtung nach außen auf die Wicklungen ausübt, die sich ihrerseits auf der Innenfläche des Widerlagers 7 (siehe Figur 2) abstützen. Die in radialer Richtung nach außen wirkende Kraft kann dadurch aufgebracht werden, dass das Innenteil 2 auf der Innenseite der die Motorspule 5 bildenden Wicklungen abrollt. Alternativ ist auch denkbar, dass das Innenteil 2 eine oszillierende Bewegung innerhalb der Wicklungen ausführt und die Richtung dieser oszillierenden Bewegung geändert wird, sodass nacheinander alle innenliegenden Umfangsabschnitte der Wicklungen verdichtet werden. Im Endzustand sind dann die inneren Lagen der einzelnen Wicklungen wieder so weit nach außen zurückgedrängt, dass der Innendurchmesser innerhalb der Wicklungen etwa dem Außendurchmesser der Endplatten 4 entspricht. Auf diese Weise ist ein im Wesentlichen konstanter Luftspalt zwischen der Motorspule 5 und dem Innenteil 2 gewährleistet.

## Patentansprüche

1. Verfahren zur Herstellung rotierender elektrischer Maschinen mit einer freitragend hergestellten Motorspule für Motoren oder Generatoren, wobei die Spule ein auf einer welle angeordnetes magnetisches Innenteil bereits bei der Herstellung umschließt, also vormontiert wird und dieses auch bei der Spulenherstellung als Hilfsmittel zur Spulenformgebung benutzt wird, **dadurch gekennzeichnet, dass**
- in einem ersten Schritt die Motorspule (5) schrittweise zwischen zwei Endflächen (4; 4') über das magnetische Innenteil (2) gewickelt wird, wobei diese das Innenteil (2) vollständig umgibt,
- in einem zweiten Schritt die Formgebung der Motorspule (5) durch Verpressen der Wickeldrähte dadurch erfolgt, dass die Welle (1) mit der Oberfläche des Innenteils (2) gegen die Innenseite der Motorspule (5) bewegt wird, so dass die Oberfläche des Innenteils (2) exzentrisch auf der Innenseite der Motorspule (5) abrollt und diese gegen ein Widerlager (7) presst, und
- in einem dritten Schritt die verpresste Motorspule (5) durch Wärmebeaufschlagung verbacken wird.

2. Verfahren nach Anspruch 1, **dadurch gekennzeichnet, dass** die Verfahrensschritte 1 und 2 zu einem einzigen Verfahrensschritt zusammengefasst werden, wobei die Formgebung der Motorspule (5) während des Wickelvorganges durch exzentrisches Abrollen der Oberfläche des Innenteils (2) auf der Innenseite der Motorspule (5) gegen ein Widerlager (7), und in einem nachfolgenden Schritt ein Verbacken der verpressten Ankerspule (5) durch Wärmebeaufschlagung erfolgt.

3. Verfahren nach Anspruch 1, **dadurch gekennzeichnet, dass** die Verfahrensschritte 1, 2 und 3 zu einem Verfahrensschritt zusammengefasst werden, wobei die Formgebung und das Verbacken der Motorspule (5) während des Wickelvorganges durch exzentrisches Abrollen der Oberfläche des Innenteils (2) auf der Innenseite der Ankerwicklung (5) gegen ein Widerlager (7), und ein schichtweises Verbacken der verpressten Wicklungen der Ankerwicklung (5) durch Wärmebeaufschlagung erfolgt.

4. Verfahren nach Anspruch 1, 2 oder 3, **dadurch gekennzeichnet, dass** das Widerlager (7) oder das Innenteil (2) während des Formgebungsvorganges mit einer mechanischen Vibration angeregt wird.

5. Verfahren nach einem der vorhergehenden Ansprüche, **dadurch gekennzeichnet, dass** die Motorspule (5) aus einem Backlackdraht gewickelt wird und dieser während des Wickelns der letzten Windungen der Motorspule (5) viereckig angerollt wird.

6. Verfahren nach einem der vorhergehenden Ansprüche, **dadurch gekennzeichnet, dass** die Endflächen Teil von Endplatten sind, die an dem Innenteil angeordnet sind.

7. Verfahren nach Anspruch 6, **dadurch gekennzeichnet, dass** der Außendurchmesser der Endplatte geringfügig größer ist als der Außendurchmesser des Innenteils, insbesondere um das doppelte des Luftspalts zwischen Motorspule und Innenteil.

8. Verfahren nach einem der vorhergehenden Ansprüche, dadurch gekenntzeichnet, dass das Innenteil drehfest mit einer Welle verbunden ist.

9. Rotierende elektrische Maschine, hergestellt mit einem Verfahren nach einem der vorhergehenden Ansprüche, **dadurch gekennzeichnet, dass** sie ein magnetisches Innenteil (2) und eine .aus mindestens einer Wicklung bestehende Motorspule (5) aufweist, die sich entlang der zylindrischen Außenfläche des Innenteils (2), über eine der Stirnseiten des Innenteils (2), zurück über die Außenfläche des Innenteils und über die andere Stirnseite des Innenteils (2) erstreckt, wobei zwischen der Innenseite der Motorspule (5) und der Außenfläche des Innenteils (2) ein Luftspalt vorhanden ist und wobei die Wicklung mindestens in dem an die Innenseite angrenzenden Abschnitt mechanisch dadurch verdichtet ist, dass die Oberfläche des Innenteiles (2) exzentrisch auf der Innenseite der Motorspule (5) abrollt und diese gegen ein Widerlager (7) presst.

10. Maschine nach Anspruch 9, **dadurch gekennzeichnet, dass** die an der Innenseite der Motorspule liegenden Drahtabschnitte auf der zur Mittelachse des Innenteils weisenden Seite abgeflacht sind.

11. Maschine nach Anspruch 9 oder Anspruch 10, **dadurch gekennzeichnet, dass** sich die Wicklung im Bereich der Außenfläche des Innenteils parallel zur Mittelachse des Innenteils erstreckt.

## Claims

1. A method for producing rotating electrical machines having a motor coil produced in a non-supported manner for motors or generators, wherein the coil already surrounds a magnetic inner part arranged on a shaft during the production process, i.e. is pre-assembled, and this is also used as an aid for coil shaping during the production of the coil, **characterised in that**
- in a first step, the motor coil (5) is wound in a stepwise process between two end faces (4; 4') over the magnetic inner part (2) and completely surrounds the inner part (2),
- in a second step, the shaping of the motor coil (5) by compressing the winding wires is carried out by moving the shaft (1) with the surface of the inner part (2) against the inner side of the motor coil (5), so that the surface of the inner part (2) eccentrically rolls off on the inner side of the motor coil (5) and presses it against an abutment (7), and
- in a third step, the compressed motor coil (5) is baked by way of applying heat.

2. The method as claimed in claim 1, **characterised in that** method steps 1 and 2 are combined into one single method step, wherein the shaping of the motor coil (5) is carried out during the winding process by eccentrically rolling off of the surface of the inner part (2) on the inner side of the motor coil (5) against an abutment (7), and in a subsequent step, the compressed armature coil (5) is baked by way of applying heat.

3. The method as claimed in claim 1, **characterised in that** method steps 1, 2 and 3 are combined into one method step, wherein the shaping and the baking of the motor coil (5) are carried out during the winding process by eccentrically rolling off of the surface of the inner part (2) on the inner side of the armature winding (5) against an abutment (7), and by a layer-wise baking of the compressed windings of the armature winding (5) by way of applying heat.

4. The method as claimed in claim 1, 2 or 3, **characterised in that** the abutment (7) or the inner part (2) is excited during the shaping process by means of mechanical vibration.

5. The method as claimed in any one of the preceding claims, **characterised in that** the motor coil (5) is wound from a self-bonding wire, which during the winding of the last turns of the motor coil (5) is pre-wound into a square shape.

6. The method as claimed in any one of the preceding claims, **characterised in that** the end faces are part of end plates which are arranged on the inner part.

7. The method as claimed in claim 6, **characterised in that** the outer diameter of the end plate is slightly larger than the outer diameter of the inner part, in particular by twice the air gap between the motor coil and the inner part.

8. The method as claimed in any one of the preceding claims, **characterised in that** the inner part is connected to a shaft in a rotationally fixed manner.

9. A rotating electrical machine, produced by means of a method as claimed in any one of the preceding claims, **characterised in that** it includes a magnetic inner part (2) and a motor coil (5) consisting of at least one winding and extending along the cylindrical outer surface of the inner part (2), over one of the front sides of the inner part (2), back over the outer surface of the inner part and over the other front side of the inner part (2), wherein an air gap is provided between the inner side of the motor coil (5) and the outer surface of the inner part (2), and wherein the winding is mechanically compacted at least in the section adjacent to the inner side **in that** the surface of the inner part (2) eccentrically rolls off on the inner side of the motor coil (5) and presses it against an abutment (7).

10. The machine as claimed in claim 9, **characterised in that** the wire sections located on the inner side of the motor coil are flattened on the side facing the central axis of the inner part.

11. The machine as claimed in claim 9 or claim 10, **characterised in that** the winding extends parallel to the central axis of the inner part in the region of the outer surface of the inner part.

## Revendications

1. Procédé de fabrication de machines électriques rotatives présentant une bobine de moteur réalisée de manière non suspendue pour des moteurs ou des générateurs, la bobine entourant déjà lors de la fabrication une pièce intérieure magnétique agencée sur une arbre, qui est ainsi pré-montée, ce qui est également utilisé lors de la fabrication de la bobine en tant que moyen auxiliaire pour la mise en forme de la bobine, **caractérisé en ce que**
- dans une première étape, la bobine de moteur (5) est progressivement enroulée entre deux faces d'extrémité (4 ; 4') sur la pièce intérieure magnétique (2) et entoure entièrement la pièce intérieure (2),
- dans une deuxième étape, la mise en forme de la bobine de moteur (5) par pressage des fils de ligature est réalisée **en ce que** l'arbre (1) est déplacé avec la surface de la pièce intérieure (2) contre la face intérieure de la bobine de moteur (5) de sorte que la surface de la pièce intérieure (2) roule de manière excentrique sur la face intérieure de la bobine de moteur (5) et la pousse contre un aboutement (7), et
- dans une troisième étape, la bobine de moteur (5) pressée est cuite par sollicitation thermique.

2. Procédé selon la revendication 1, **caractérisé en ce que** les étapes de procédé 1 et 2 sont réunies dans une seule étape de procédé, la mise en forme de la bobine de moteur (5) étant réalisée lors de l'opération d'enroulement par roulement excentrique de la surface de la pièce intérieure (2) sur la face intérieure de la bobine de moteur (5) contre un aboutement (7) et une cuisson de la bobine d'induit (5) pressée étant réalisée dans une étape subséquente par sollicitation thermique.

3. Procédé selon la revendication 1, **caractérisé en ce que** les étapes de procédé 1, 2 et 3 sont réunies dans une étapes de procédé, la mise en forme et la cuisson de la bobine de moteur (5) étant réalisées lors de l'opération d'enroulement par roulement excentrique de la surface de la pièce intérieure (2) sur la face intérieure de l'enroulement d'induit (5) contre un aboutement (7) et une cuisson par couches des enroulements pressés de l'enroulement d'induit (5) étant réalisée par sollicitation thermique.

4. Procédé selon la revendication 1, 2 ou 3, **caractérisé en ce que** l'aboutement (7) ou la pièce intérieure (2) est excité(e) par une vibration mécanique pendant l'opération de mise en forme.

5. Procédé selon l'une des revendications précédentes, **caractérisé en ce que** la bobine de moteur (5) est enroulée à partir d'un fil thermo-adhérent et **en ce que** celui-ci est pré-roulé de manière rectangulaire lors de l'enroulement des dernières spires de la bobine de moteur (5).

6. Procédé selon l'une des revendications précédentes, **caractérisé en ce que** les faces d'extrémité font partie de plaques d'extrémité qui sont agencées sur la pièce intérieure.

7. Procédé selon la revendication 6, **caractérisé en ce que** le diamètre extérieur de la plaque d'extrémité est légèrement supérieur au diamètre extérieur de la pièce intérieure, en particulier du double de l'entrefer entre la bobine de moteur et la pièce intérieure.

8. Procédé selon l'une des revendications précédentes, **caractérisé en ce que** la pièce intérieure est reliée solidaire en rotation à un arbre.

9. Machine électrique rotative, fabriquée au moyen d'un procédé selon l'une des revendications précédentes, **caractérisée en ce qu'**elle présente une pièce intérieure magnétique (2) et une bobine de moteur (5) qui est composée d'au moins un enroulement et qui s'étend le long de la face extérieure cylindrique de la pièce intérieure (2), via l'une des faces frontales de la pièce intérieure (2) en retour via la face extérieure de la pièce intérieure et l'autre face frontale de la pièce intérieure (2), un entrefer étant présent entre la face intérieure de la bobine de moteur (5) et la face extérieure de la pièce intérieure (2), et l'enroulement étant comprimé mécaniquement au moins dans le tronçon adjacent à la face intérieure **en ce que** la surface de la pièce intérieure (2) roule de manière excentrique sur la face intérieure de la bobine de moteur (5) et la pousse contre un aboutement (7).

10. Machine selon la revendication 9, **caractérisée en ce que** les tronçons de fil métallique agencés sur la face intérieure de la bobine de moteur sont aplatis du côté tourné vers l'axe médian de la pièce intérieure.

11. Machine selon la revendication 9 ou la revendication 10, **caractérisée en ce que** l'enroulement s'étend parallèlement à l'axe médian de la pièce intérieure dans la zone de la face extérieure de la pièce intérieure.
